# DEMANDE DE BREVET EUROPEEN

(11) **EP 0 707 375 A1**
(43) Date de publication de la demande: **17.04.1996**
(21) Numéro de dépôt: 95402215.8
(22) Date de dépôt: 04.10.1995
(51) Int. Cl.: H02K 29/00, H02K 29/03

(54) **Moteur électrique à courant continu sans balai à faible ondulation de couple**

(30) Priorité: 11.10.1994 FR 9412121
(71) Demandeur: AEROSPATIALE Société Nationale Industrielle, F-75781 Paris Cédex 16 (FR)
(72) Inventeur: Marroux, Olivier, F-75016 Paris (FR)
(74) Mandataire: Santarelli, Marc

(57) **Abrégé**

Un moteur électrique à courant continu sans balai comportant un premier ensemble comportant une série paire d'aimants permanents (M1, M2) à aimantations alternées en regard d'une pièce polaire ferromagnétique (P1) avec laquelle cette série d'aimants définit un entrefer (E), les aimantations des aimants étant perpendiculaires à cet entrefer, et un second ensemble en mouvement relatif par rapport au premier ensemble, comportant une série de bobinages (B) engagés dans l'entrefer et adaptés à se déplacer longitudinalement dans celui-ci, un dispositif de commutation (D) adapté à commander l'alimentation de ces bobinages,
ce moteur étant caractérisé en ce que la largeur de l'entrefer est variable, avec des maxima situés en regard du centre de chacun des aimants et bordés circonférentiellement par des zones d'entrefer de moindre largeur.

## Description

L'invention concerne un moteur électrique à courant continu sans balai.

Ainsi qu'on le sait, un tel moteur comporte, d'une part, une série d'aimants permanents alternés en regard d'une ou plusieurs pièce(s) polaire(s) ferromagnétique(s) au travers d'un entrefer et, d'autre part, une série paire de bobinages alimentés en énergie selon une chronologie donnée et adaptés à se mouvoir dans l'entrefer. Généralement, mais pas nécessairement, la série d'aimants et la (les) pièce(s) polaire(s) sont solidaires d'une pièce mobile (un rotor en pratique, auquel cas l'entrefer est circulaire) tandis que la série de bobinages est solidaire d'une pièce fixe (stator). L'alimentation de l'ensemble se fait en courant continu et un dispositif de commutation, avantageusement commandé en fonction du mouvement relatif entre les deux pièces précitées, applique le courant continu individuellement à chaque bobinage de façon discontinue. Le couple ainsi généré en raison des forces de LAPLACE, est approximativement continu, avec toutefois des ondulations dues à la discontinuité de la série des aimants permanents alternés et de la série des bobines.

De tels moteurs ont notamment des applications spatiales, pour la commande en rotation de roues d'inertie ou de réaction par exemple.

Or les exigences du point de vue vibratoire sont de plus en plus sévères en ce qui concerne, par exemple, les plates-formes d'observation de la Terre, et donc en ce qui concerne tous les équipements de celles-ci, y compris notamment les roues de réaction ou d'inertie.

Chaque fonction de telles roues doit donc être optimisée du point de vue de l'absence de génération de perturbations vibratoires, sous peine d'imposer un flou sur les prises de vues.

L'invention a pour objet de contribuer à répondre à cet objectif.

Plus précisément, l'invention vise un moteur électrique à courant continu et sans balai, dont l'ondulation de couple soit minimisée par rapport aux solutions connues, et ce de manière simple, par de simples aménagements géométriques, sans avoir notamment à compliquer les principes connus de commutation de courant des bobinages.

L'invention vise à permettre, dans certains cas de moteurs tournants, une ondulation de couple sur un tour inférieure à de l'ordre du pour cent (± 1 à 20 %).

L'invention propose à cet effet un moteur électrique à courant continu sans balai comportant un premier ensemble comportant une série paire d'aimants permanents à aimantations alternées en regard d'une pièce polaire ferromagnétique avec laquelle cette série d'aimants définit un entrefer, les aimantations des aimants étant perpendiculaires à cet entrefer, et un second ensemble en mouvement relatif par rapport au premier ensemble, comportant une série de bobinages engagés dans l'entrefer et adaptés à se déplacer longitudinalement dans celui-ci, un dispositif de commutation adapté à commander l'alimentation de ces bobinages,

ce moteur étant caractérisé en ce que la largeur de l'entrefer est variable, avec des maxima situés en regard du centre de chacun des aimants et bordés circonférentiellement par des zones d'entrefer de moindre largeur.

Selon des enseignements préférés de l'invention, éventuellement combinés :
- la largeur est minimale en regard de zones où des aimants adjacents ont des tranches en regard,
- la différence entre les valeurs maximale et minimale de l'entrefer vaut entre 5 % et 20 % environ de la valeur moyenne de la largeur de l'entrefer,
- cette différence vaut entre 6 % et 15 % environ de ladite valeur moyenne,
- la pièce polaire ferromagnétique comporte des évidements en regard du centre des aimants,
- l'entrefer est formé d'une succession de tronçons d'entrefer de largeur constante,
- l'entrefer est formé par une alternance de tronçons de largeur maximale et de tronçons de largeur minimale,
- les tronçons de largeur maximale ont une longueur supérieure à la longueur des tronçons de largeur minimale,
- les tronçons de largeur maximale ont une longueur qui vaut entre 25 % et 50 % environ de la distance entre les centres d'aimants successifs,
- les tronçons de largeur maximale ont une longueur qui vaut de l'ordre de 35 % de la distance entre les centres d'aimants successifs,
- la pièce polaire ferromagnétique comporte des évidements bordés par des plans inclinés de transition,
- les plans inclinés de transition convergent en une arête.

Des objets, caractéristiques et avantages de l'invention ressortent de la description qui suit, donnée à titre d'exemple non limitatif, en regard des dessins annexés sur lesquels :
- la figure 1 est une vue partielle de dessus, schématique, d'un moteur conforme à l'invention, en développement rectiligne, représentant un pas élémentaire,
- la figure 2A est un schéma montrant la forme des lignes d'induction dans l'entrefer du pas élémentaire de la figure 1,
- la figure 2B est, à des fins de comparaison, un schéma montrant la forme des lignes d'induction dans l'entre-fer d'un pas élémentaire de moteur classique, à entrefer constant,
- la figure 3A est un graphique montrant la variation de l'induction dans une bobine circulant au milieu de l'entrefer de la figure 1,
- la figure 3B est un graphique montrant, à titre de comparaison, la variation de l'induction dans une bobine circulant au milieu de l'entrefer d'un moteur classique à entrefer constant,
- la figure 4A est un graphique montrant l'ondulation de l'induction dans l'entrefer de la figure 1 vue ou moyennée par une bobine sur quatre périodes,
- la figure 4B est, à des fins de comparaison, l'ondulation de l'induction dans l'entrefer d'un moteur classique, vue ou moyennée par une bobine sur quatre périodes,
- les figures 5A, 5B, 5C sont des graphiques similaires à ceux des figures 3A et 3B, pour diverses tailles de bobinages, et
- les figures 6A, 6B, 6C sont, pour ces diverses tailles de bobinages, des graphiques similaires à ceux des figures 4A et 4B,
- la figure 7 est une vue partielle d'une variante de réalisation du dispositif de la figure 1, et
- la figure 8 est une vue partielle d'encore une autre variante de réalisation.

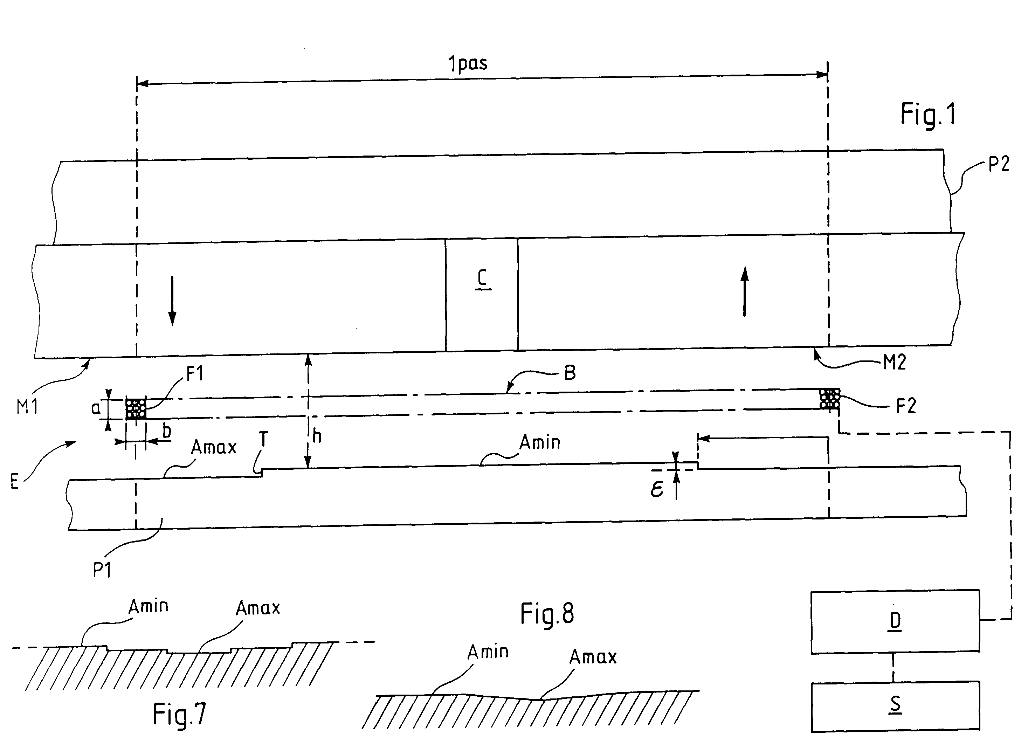

La figure 1 montre, en développement rectiligne, la géométrie des éléments constitutifs d'un pas élémentaire d'un moteur conforme à l'invention.

Ces éléments constitutifs comportent tout d'abord deux moitiés d'aimants permanents M1 et M2 disposés tête-bêche, longeant un entrefer E, par ailleurs bordé par une pièce polaire ferromagnétique P1. Les aimants ont leurs directions d'aimantation perpendiculaires à l'entrefer. Ils sont fixés par leurs faces arrière à une autre pièce polaire ferromagnétique P2. Ils sont ici séparés par une cale C en matériau amagnétique ; en fait cette cale, qui peut être omise, peut participer à la fixation des aimants mais aussi à un bon dimensionnement des pas du moteur (la longueur d'un pas est la distance entre les centres de deux aimants successifs).

Dans l'entrefer E est disposé un bobinage B comprenant un faisceau F1 de brins ascendants (perpendiculaires au dessin et orientés vers le lecteur) et un faisceau F2 de brins descendants (perpendiculaires au dessin et orientés vers l'opposé du lecteur). L'espacement entre ces faisceaux est généralement égal au pas du moteur. On appelle épaisseur a la dimension transverse de chacun des faisceaux et largeur b la dimension longitudinale de ceux-ci.

Un dispositif schématisé en D, classique en soi, est connecté à une série de bobinages, dont le bobinage B précité, en vue d'en commuter la connection à une source de courant continu S.

Les aimants et les pièces polaires sont solidaires d'une première pièce, par exemple un rotor (l'entrefer étant en réalité annulaire en ayant par exemple son centre vers le bas de la figure 1) tandis que les bobinages et généralement le dispositif D, sont solidaires d'une seconde pièce en mouvement relatif vis-à-vis de la première pièce, par exemple un stator.

Cette structure générale, y compris le choix des nombres d'aimants, de bobinages, les connexions entre ces bobinages et les modalités de commutation de ces bobinages sont classiques en soi et ne seront pas développés ici. En tant que de besoin, on peut se référer par exemple au document US-4.211.452. On peut toutefois rappeler que le plus souvent, dans une série annulaire d'aimants, si N est le nombre de phases et n le nombre de bobinages par phase (c'est-à-dire alimentés aux mêmes instants) il y a 3n paires d'aimants (ou de pôles) dans la série annulaire (le chiffre 3 provenant des règles habituelles de construction) et il y a 3n.N commutations par tour ; chaque bobine est alimentée pendant la moitié d'un pas, et ce tous les N pas. A titre d'exemple, il y a 4 bobinages par phases et 4 phases : il faut 24 aimants et 48 commutations par tour. L'ordre d'utilisation des bobinages (ou bobines, ou inducteurs) va dans le sens inverse du sens de rotation.

A la différence d'un moteur classique, l'entrefer E a une largeur variable, maximale en regard du centre des aimants et minimale en regard de la zone (ici la cale C) où les aimants de la paire considérée ont des tranches en regard : la largeur de l'entrefer varie donc de façon périodique avec période spatiale égale à la demi-période spatiale du champ magnétique dans l'entrefer (puisque les aimants ont des sens d'induction alternés).

L'amplitude ε de variation de largeur de l'entrefer vaut de préférence entre 5 % et 20 % de la largeur moyenne de cet entrefer, par exemple entre 10 % et 15 % environ.

A titre d'exemple, cette amplitude vaut 0,43 mm pour une largeur minimale h d'entrefer de 6,5 mm.

Cette largeur variable peut être obtenue par un profil sinueux de l'une ou l'autre des surfaces délimitant l'entrefer. De préférence, c'est sur la pièce ferromagnétique P1 que sont matérialisées les "ondulations" géométriques responsables de la variation de largeur.

Ces ondulations géométriques peuvent être continues, par exemple sinusoïdales.

Pour des raisons de simplicité, il paraît plus facile de réaliser ces ondulations par une succession de paliers.

En fait des essais ont montré qu'une solution tout à fait satisfaisante consiste à se limiter à une alternance de deux types de paliers seulement, l'un Amin correspondant à une épaisseur minimale d'entrefer et l'autre, Amax, correspondant à une épaisseur maximale d'entrefer. On obtient ainsi un simple profil crénelé ; les transitions T entre ces paliers sont ici brutales (en variante il peut s'agir de zones inclinées de transition). Le palier Amax a une longueur de préférence comprise entre 25 % et 50 % de la longueur du pas, c'est-à-dire inférieure à la longueur du palier Amin. La longueur de Amax représente, dans l'exemple représenté, de l'ordre de 35 % de la longueur du pas.

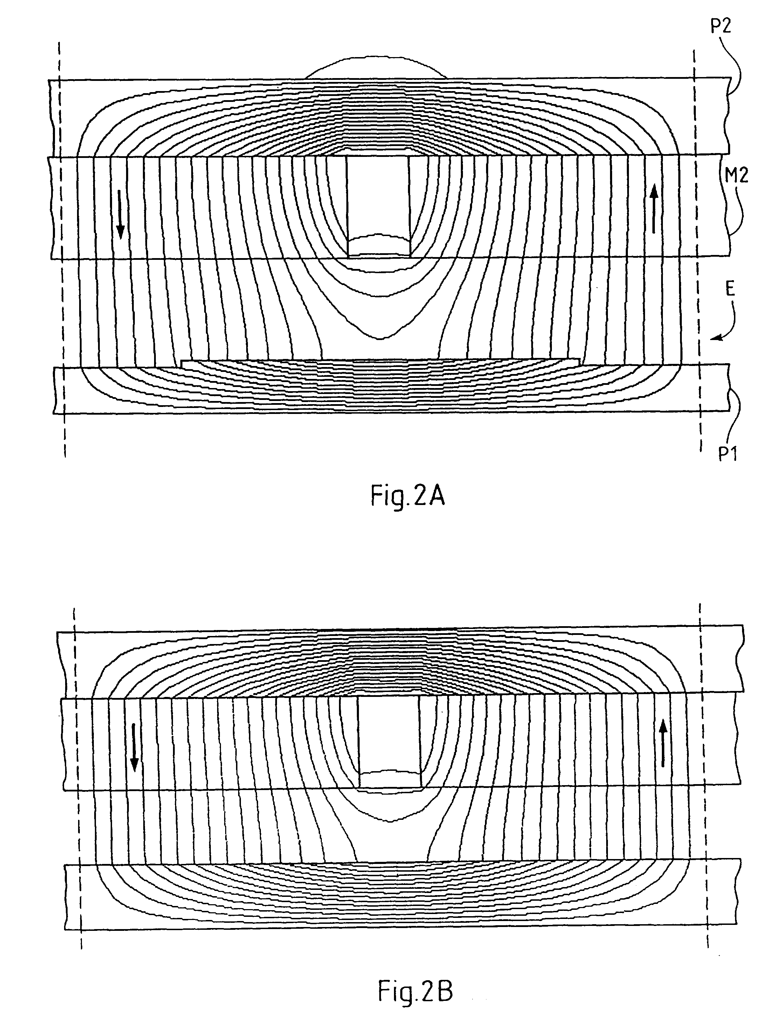

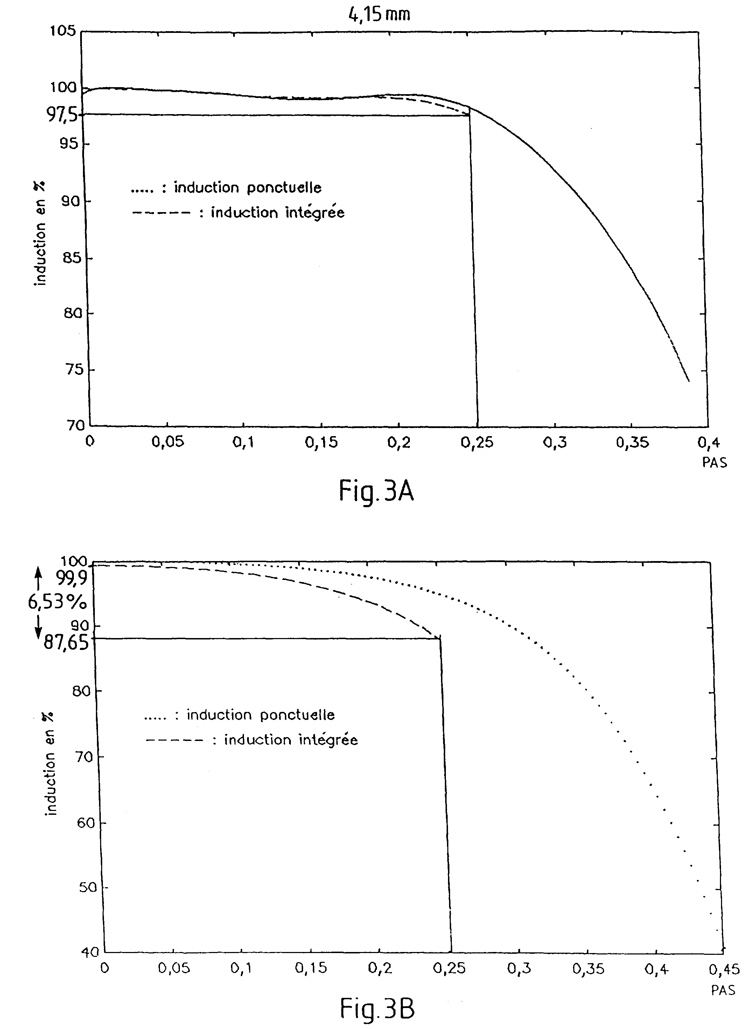

Les figures 2A et 3A représentent respectivement les lignes d'induction au travers des éléments de la figure 1, et, d'une part, l'amplitude de l'induction au milieu de l'entrefer (courbe d'induction ponctuelle en pointillés) et, d'autre part, l'induction vue, ou moyennée par un bobinage qui passe en étant alimenté (courbe d'induction intégrée en tiretés). Il est à noter à propos de cette figure que le bobinage considéré n'est alimenté que pendant 1/4 de pas à partir du milieu d'un pas.

On observe sur la figure 2A, par comparaison avec la figure 2B correspondant à un entrefer constant, que les lignes d'induction sont mieux réparties spatialement dans l'entrefer ; en particulier, en regard de la cale C, on observe trois lignes d'induction dans l'entrefer de la figure 2A alors qu'il n'y en a qu'une seule à la figure 2B. Il est rappelé que l'amplitude de l'induction est d'autant plus importante en une zone donnée que les lignes d'induction y sont nombreuses et rapprochées.

En ce qui concerne les figures 3A et 3B, on observe que, selon l'invention, la courbe ponctuelle baisse, sur 1/4 de pas de 100 % à 97,5 % ce qui, sur un demi-pas (entre -0,25 et +0,25 pas) correspond à une amplitude de variation de ± 1,3 %. Cela est très inférieur au cas de la figure 3B où l'ondulation baisse de 100 % à 87,6 % ce qui correspond à une amplitude de variation de ± 6,5 %.

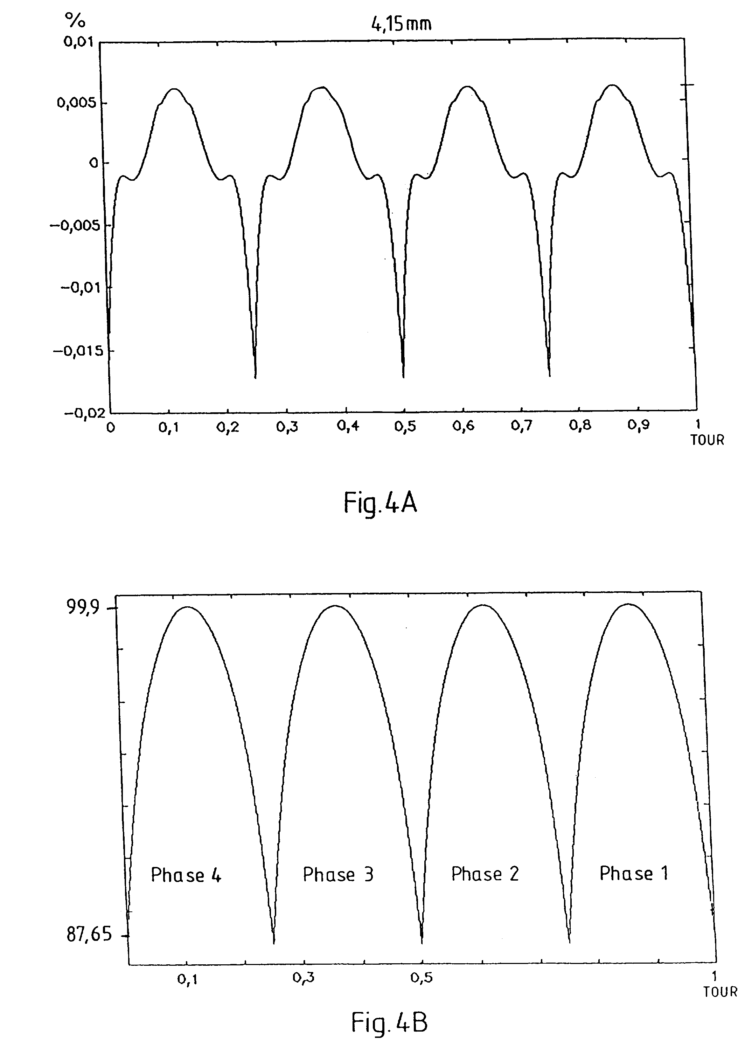

La figure 4A montre l'induction vue ou moyennée par l'ensemble des bobinages circulant dans l'entrefer, au cours de quatre périodes successives (c'est-à-dire au cours de quatre pas ou phases successifs) pendant lesquelles les bobinages sont alimentés successivement. Cette courbe a en abscisse le temps (en fraction de douzième de tour) et en ordonnée la valeur de l'écart donnée en pour cent de la valeur moyenne du couple (valeur 0)) de l'induction instantanée par rapport à la valeur moyenne (écart égal à zéro).

Par comparaison avec la figure 4B qui correspond au cas d'un entrefer constant (épaisseur minimale de l'exemple de la figure 4A), on note, outre le fait que l'amplitude d'ondulation est moindre, la courbe est un peu plus plate pour l'invention que pour le cas classique sans variation d'entrefer.

Les figures 3A et 4A correspondent au cas d'un bobinage simple formé d'une nappe de 4,15 mm de largeur b et de 1,2 mm d'épaisseur a, dans un entrefer ayant une épaisseur minimale de 6,5 mm et une épaisseur maximale de 6,96 mm.

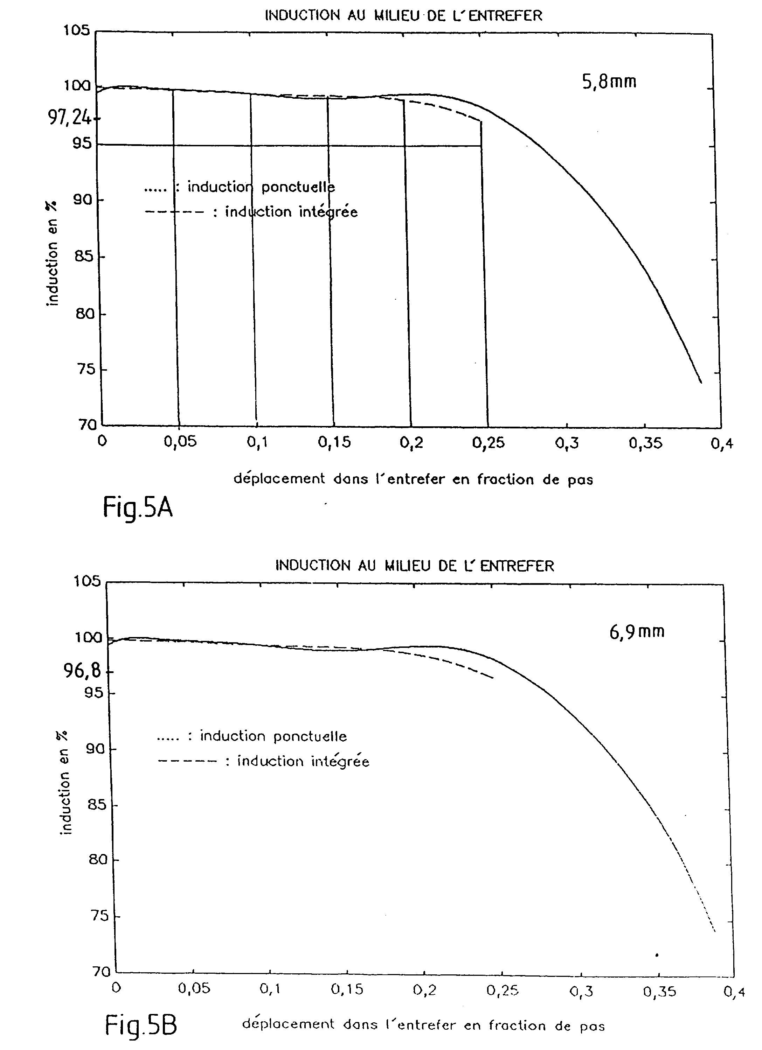

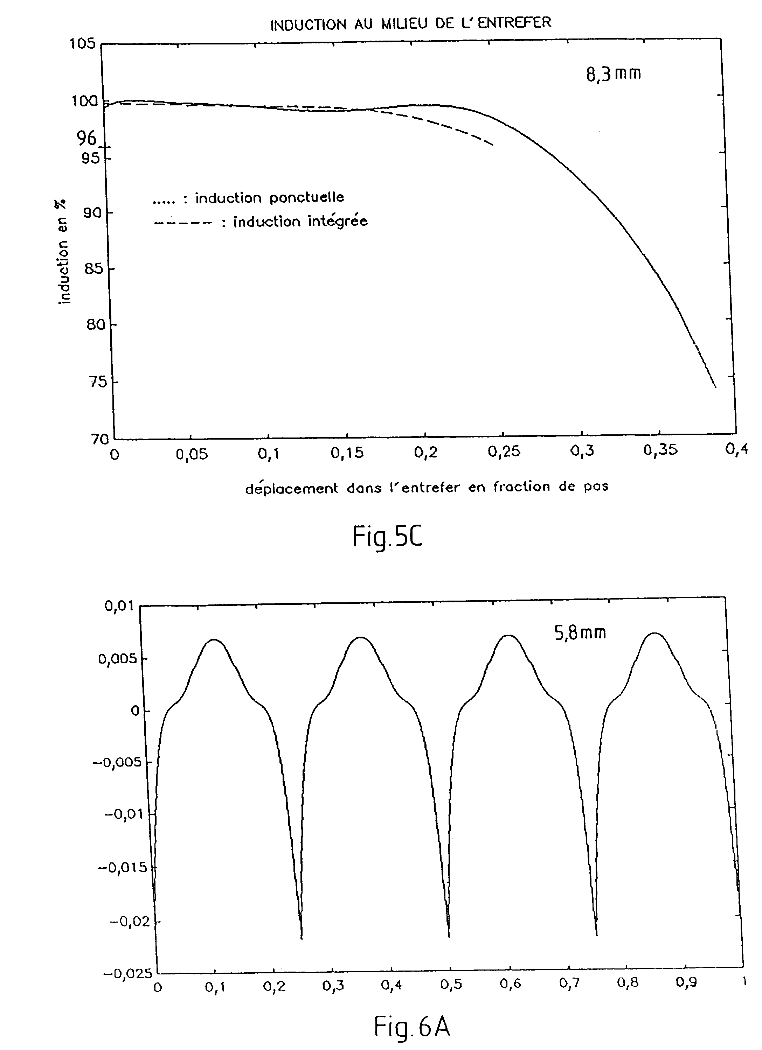

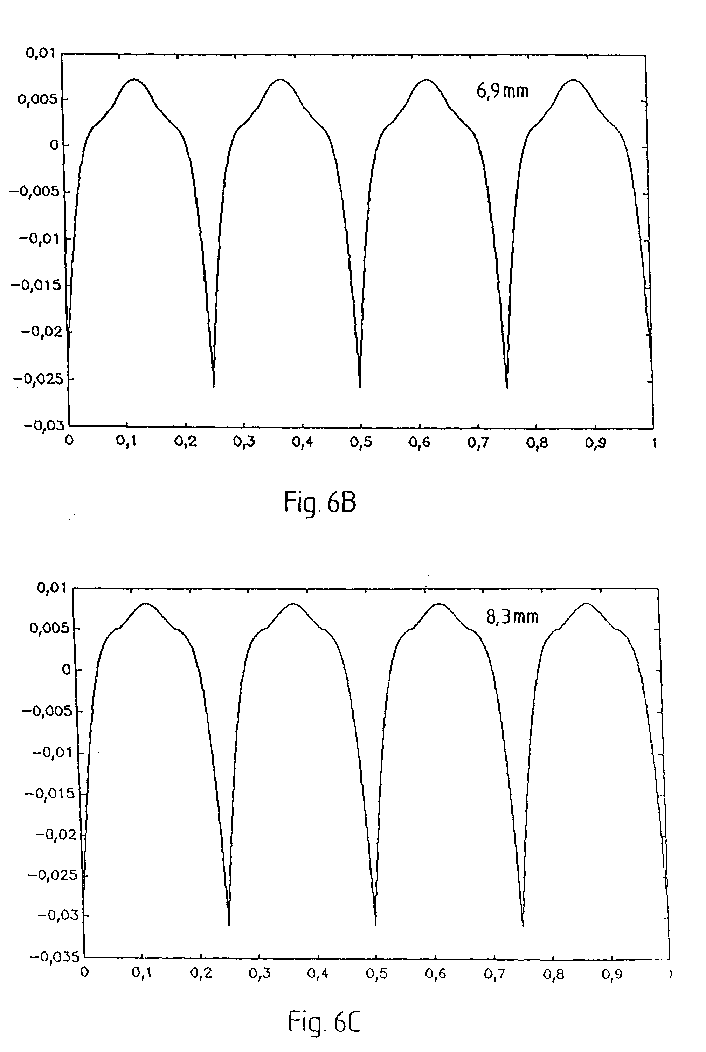

Les figures 5A et 6A, 5B et 6B, 5C et 6C correspondent à des variantes de réalisation où la largeur b du bobinage est de 5,8 mm, puis 6,9 mm, puis 8,3 mm tandis que la largeur a et les valeurs extrêmes de la largeur de l'entrefer sont celles précitées.

On constate que l'amplitude d'ondulation augmente lentement lorsqu'on augmente l'épaisseur de bobinage :
. ± 1,3 % pour 4,15 mm d'épaisseur
. ± 1,4 % pour 5,8 mm d'épaisseur
. ± 1,65 % pour 6,9 mm d'épaisseur
. ± 2,04 % pour 8,3 mm d'épaisseur.

De même, on constate que la forme un peu aplatie de la figure 4A se retrouve sur les figures 6A, 6B et 6C.

On constate ainsi que, pour plusieurs épaisseurs de bobinage (et plusieurs largeurs moyennes d'entrefer) l'invention a permis, par de simples modifications géométriques, de limiter les ondulations d'induction à ± 2 % voire moins, c'est-à-dire à un niveau bien plus faible qu'avec des entrefers de largeur constante.

Ainsi, contrairement à ce que l'on pouvait craindre, le fait de rendre la géométrie de l'entrefer plus "chahutée" conduit à une induction, donc à un couple, plus stable que par le passé.

Il est possible (voir figure 7) de modifier le rang des harmoniques générées par le moteur, en prévoyant des paliers intermédiaires entre les valeurs extrêmes d'entrefer, établissant une transition plus ou moins douce, ayant par exemple des longueurs égales entre elles et à celle de la zone d'entrefer maximum.

Ceci permet éventuellement de rejeter très loin les harmoniques perturbatrices.

Selon encore une autre variante, les transitions entre Amin et Amax sont constituées par des plans inclinés. A la figure 8, Amax se réduit en une simple arête en laquelle convergent ces plans inclinés.

La présence de la cale C est apparue améliorer (en la minimisant) l'ondulation du moteur mais, même en son absence, des variations de largeur d'entrefer conformément à l'invention se révèleraient favorables à une réduction des ondulations d'induction et donc de couple.

Il va de soi que la description qui précède n'a été proposée qu'à titre d'exemple non limitatif et que de nombreuses variantes peuvent être proposées par l'homme de l'art sans sortir du cadre de l'invention. C'est ainsi notamment que la largeur n'est pas nécessairement minimale en regard des zones où des aimants adjacents ont des tranches en regard ; c'est ainsi par exemple que des maxima locaux de largeur peuvent être ménagés en ces zones (notamment en regard des cales).

## Revendications

1. Moteur électrique à courant continu sans balai comportant un premier ensemble comportant une série paire d'aimants permanents (M1, M2) à aimantations alternées en regard d'une pièce polaire ferromagnétique (P1) avec laquelle cette série d'aimants définit un entrefer (E), les aimantations des aimants étant perpendiculaires à cet entrefer, et un second ensemble en mouvement relatif par rapport au premier ensemble, comportant une série de bobinages (B) engagés dans l'entrefer et adaptés à se déplacer longitudinalement dans celui-ci, un dispositif de commutation (D) adapté à commander l'alimentation de ces bobinages,
ce moteur étant caractérisé en ce que la largeur de l'entrefer est variable, avec des maxima situés en regard du centre de chacun des aimants et bordés circonférientiellement par des zones d'entrefer de moindre largeur.

2. Moteur électrique selon la revendication 1, caractérisé en ce que la largeur est minimale en regard de zones où des aimants adjacents ont des tranches en regard.

3. Moteur électrique selon la revendication 1 ou la revendication 2, caractérisé en ce que la différence entre les valeurs maximale et minimale de l'entrefer vaut entre 5 % et 20 % environ de la valeur moyenne de la largeur de l'entrefer.

4. Moteur électrique selon la revendication 3, caractérisé en ce que cette différence vaut entre 6 % et 15 % environ de ladite valeur moyenne.

5. Moteur électrique selon l'une quelconque des revendications 1 à 4, caractérisé en ce que la pièce polaire ferromagnétique comporte des évidements en regard du centre des aimants.

6. Moteur électrique selon l'une quelconque des revendications 1 à 5, caractérisé en ce que l'entrefer est formé d'une succession de tronçons d'entrefer de largeur constante.

7. Moteur électrique selon la revendication 6, caractérisé en ce que l'entrefer est formé par une alternance de tronçons de largeur maximale (Amax) et de tronçons de largeur minimale (Amin).

8. Moteur électrique selon la revendication 7, caractérisé en ce que les tronçons de largeur maximale ont une longueur supérieure à la longueur des tronçons de largeur minimale.

9. Moteur électrique selon la revendication 8, caractérisé en ce que les tronçons de largeur maximale ont une longueur qui vaut entre 25 % et 50 % environ de la distance entre les centres d'aimants successifs.

10. Moteur électrique selon la revendication 9, caractérisé en ce que les tronçons de largeur maximale ont une longueur qui vaut de l'ordre de 35 % de la distance entre les centres d'aimants successifs.

11. Moteur électrique selon l'une quelconque des revendications 1 à 5, caractérisé en ce que la pièce polaire ferromagnétique comporte des évidements bordés par des plans inclinés de transition.

12. Moteur électrique selon la revendication 11, caractérisé en ce que les plans inclinés de transition convergent en une arête.
